# EUROPEAN PATENT APPLICATION

(11) **EP 1 819 024 A1**
(43) Date of publication of application: **15.08.2007**
(21) Application number: 05811300.2
(22) Date of filing: 29.11.2005
(51) Int. Cl.: H02J 3/46, B60L 11/18, H02J 3/38

(54) **ELECTRIC-POWER SUPPLY SYSTEM, AND VEHICLE**

(30) Priority: 30.11.2004 JP 2004346930
(71) Applicant: TOYOTA JIDOSHA KABUSHIKI KAISHA, Toyota-shi, Aichi-ken, 471-8571 (JP)
(72) Inventor: OYOBE, Hichirosai, TOYOTA JIDOSHA K. K., Toyota-shi, Aichi 471-8571 (JP); ISHIKAWA, Tetsuhiro, TOYOTA JIDOSHA K. K., Toyota-shi, Aichi 471-8571 (JP); MINEZAWA, Yukihiro, TOYOTA JIDOSHA K. K., Toyota-shi, Aichi 471-8571 (JP); SATO, Hitoshi c/o Toyota Jidosha Kabushiki Kaisha, Aichi-ken, 471-8571 (JP)
(74) Representative: TBK-Patent
(86) International application number: PCT/JP2005/022266
(87) International publication number: WO 2006/059763

(57) **Abstract**

A first hybrid vehicle (10A) is connected to a house-side connector (40). A second hybrid vehicle (10B) is connected to the first hybrid vehicle (10A), and they are connected in parallel within the first hybrid vehicle (10A) with respect to a house load (20). When a commercial system power source (50) is interrupted, an automatic switching circuit (30) is activated, and the house load (20) receives electric power from the first and second hybrid vehicles (10A, 10B). The first hybrid vehicle (10A) determines allocations of the amounts of electric power supply from the first and second hybrid vehicles (10A, 10B) based on the amount of the house load (20) and on the residual amounts of fuel in the first and second hybrid vehicles (10A, 10B).

## Description

### Technical Field

The present invention relates to an electric-power supply system and a vehicle. More particularly, the present invention relates to an electric-power supply system using a vehicle capable of supplying electric power to an electric load external to the vehicle, and the vehicle used for the same.

### Background Art

Japanese Patent Laying-Open No. 04-295202 discloses an electric motor drive and power processing system used for a vehicle driven by electric power. The electric motor drive and power processing system includes a secondary battery, inverters IA and IB, induction motors MA and MB, and a control unit. Induction motors MA and MB include windings CA and CB in Y connection, respectively, and an input/output port is connected via an EMI filter to neutral point NA of winding CA and neutral point NB of winding CB.

Inverters IA and IB are provided corresponding to induction motors MA and MB, respectively, and connected to windings CA and CB, respectively. Then, inverters IA and IB are connected in parallel to the secondary battery.

In the electric motor drive and power processing system, in a recharge mode, alternating-current (AC) electric power is supplied from a single-phase electric power source connected to the input/output port, via the EMI filter, to across neutral point NA of winding CA and neutral point NB of winding CB, and inverters IA and IB convert the AC electric power supplied to across neutral points NA and NB into direct-current (DC) electric power and charge a DC electric power source.

Further, in the electric motor drive and power processing system, inverters IA and IB can also generate sinusoidal, regulated AC electric power across neutral points NA and NB, and supply the generated AC electric power to an external apparatus connected to the input/output port.

However, in the electric motor drive and power processing system disclosed in Japanese Patent Laying-Open No. 04-295202, shortage of electric power supply may occur when the AC electric power is generated and supplied to the external apparatus, depending on the amount of load on the external apparatus and the electric-power supply capacity of the electric motor drive and power processing system.

### Disclosure of the Invention

The present invention has been made to solve the above problem, and one object of the present invention is to provide an electric-power supply system providing electric-power supply in accordance with the amount of load on an external load receiving the electric-power supply and the supply capacity of an electric-power supply apparatus.

Another object of the present invention is to provide a vehicle used for the electric-power supply system providing electric-power supply in accordance with the amount of load on an external load receiving the electric-power supply and the supply capacity of an electric-power supply apparatus.

According to the present invention, the electric-power supply system includes: a plurality of vehicles electrically connected in parallel with respect to an electric load and supplying electric power to the electric load; and a system controller determining allocation of amounts of electric power supply from the plurality of vehicles based on an amount of load on the electric load and an amount of electric power capable of being supplied from each of the plurality of vehicles. Each of the plurality of vehicles supplies electric power to the electric load based on the allocation.

Preferably, the system controller is mounted in one of the plurality of vehicles.

Preferably, the system controller further generates a synchronization signal for synchronizing AC electric power to be output from each of the plurality of vehicles with each other. Each of the plurality of vehicles outputs the AC electric power in synchronization with the synchronization signal.

Preferably, each of the plurality of vehicles includes: an internal combustion engine; a generator coupled to the internal combustion engine and including a first three-phase coil in Y connection as a stator coil; an electric motor including a second three-phase coil in Y connection as a stator coil; first and second inverters connected to the generator and the electric motor, respectively, to drive the generator and the electric motor, respectively, using electric power generated using output of the internal combustion engine; and a controller controlling operation of the first and second inverters. The controller controls the first and second inverters to generate AC electric power to be supplied to the electric load across a neutral point of the first three-phase coil and a neutral point of the second three-phase coil, using the electric power generated using the output of the internal combustion engine.

Preferably, the system controller calculates the amount of electric power capable of being supplied from each of the plurality of vehicles based on a residual amount of fuel in each of the plurality of vehicles.

Further, according to the present invention, the vehicle is capable of supplying electric power to an electric load external to the vehicle, and the vehicle includes: an electric-power generation device generating the electric power; a first connection terminal for connecting the vehicle with the electric load; a second connection terminal for connecting another vehicle to the vehicle to electrically connect the other vehicle with the vehicle in parallel with respect to the electric load; and a system controller determining allocation of amounts of electric power supply from the vehicle and the other vehicle connected to the second connection terminal based on an amount of load on the electric load and an amount of electric power capable of being supplied from each of the vehicle and the other vehicle, operating the electric-power generation device based on the allocation, and outputting an electric power command in accordance with the allocation to the other vehicle.

Preferably, the system controller further outputs a synchronization signal for synchronizing second AC electric power to be output from the other vehicle connected to the second connection terminal to first AC electric power to be generated by the electric-power generation device, to the other vehicle.

Preferably, the electric-power generation device includes: an internal combustion engine; a generator coupled to the internal combustion engine and including a first three-phase coil in Y connection as a stator coil; an electric motor including a second three-phase coil in Y connection as a stator coil; first and second inverters connected to the generator and the electric motor, respectively, to drive the generator and the electric motor, respectively, using electric power generated using output of the internal combustion engine; and a controller controlling operation of the first and second inverters. The controller controls the first and second inverters to generate AC electric power to be supplied to the electric load across a neutral point of the first three-phase coil and a neutral point of the second three-phase coil, using the electric power generated using the output of the internal combustion engine.

Preferably, the system controller calculates the amount of electric power capable of being supplied from each of the vehicle and the other vehicle connected to the second connection terminal based on a residual amount of fuel in each of the vehicle and the other vehicle.

Further, according to the present invention, the vehicle is capable of supplying electric power to an electric load external to the vehicle, and the vehicle includes: an electric-power generation device generating the electric power; a connection terminal for electrically connecting the vehicle to another vehicle to output the electric power generated by the electric-power generation device via the other vehicle to the electric load; and a system controller operating the electric-power generation device based on an electric power command received from the other vehicle.

Preferably, the system controller receives a synchronization signal for synchronizing first AC electric power to be generated by the electric-power generation device to second AC electric power to be output from the other vehicle connected to the connection terminal, from the other vehicle, and controls the electric-power generation device to generate the first AC electric power in synchronization with the received synchronization signal.

Further, according to the present invention, the vehicle is capable of supplying electric power to an electric load external to the vehicle, and the vehicle includes: an electric-power generation device generating the electric power; a first connection terminal for electrically connecting the vehicle to another first vehicle to output the electric power generated by the electric-power generation device via the other first vehicle to the electric load; a second connection terminal for connecting another second vehicle to the vehicle to electrically connect the other second vehicle with the vehicle in parallel with respect to the electric load; and a system controller operating the electric-power generation device based on an electric power command received from the other first vehicle,

Preferably, the system controller receives a synchronization signal for synchronizing first AC electric power to be generated by the electric-power generation device to second AC electric power to be output from the other first vehicle connected to the first connection terminal, from the other first vehicle, and controls the electric-power generation device to generate the first AC electric power in synchronization with the received synchronization signal.

Preferably, the electric-power generation device includes: an internal combustion engine; a generator coupled to the internal combustion engine and including a first three-phase coil in Y connection as a stator coil; an electric motor including a second three-phase coil in Y connection as a stator coil; first and second inverters connected to the generator and the electric motor, respectively, to drive the generator and the electric motor, respectively, using electric power generated using output of the internal combustion engine; and a controller controlling operation of the first and second inverters. The controller controls the first and second inverters to generate AC electric power to be supplied to the electric load across a neutral point of the first three-phase coil and a neutral point of the second three-phase coil, using the electric power generated using the output of the internal combustion engine.

In the electric-power supply system in accordance with the present invention, a plurality of vehicles supplying electric power to an electric load are electrically connected in parallel with respect to the electric load. A system controller determines allocation of amounts of electric power supply from the plurality of vehicles based on an amount of load on the electric load and an amount of electric power capable of being supplied from each of the plurality of vehicles, and each of the plurality of vehicles supplies electric power to the electric load based on the allocation. Consequently, electric power exceeding the electric power capable of being output from one vehicle can be supplied, with consideration of the electric-power supply capacity of each of the plurality of vehicles.

Therefore, according to the present invention, electric power exceeding the electric-power supply capacity of one vehicle can be supplied to the electric load. Further, the amounts of electric power supply from the plurality of vehicles are allocated appropriately based on the amount of load on the electric load. Furthermore, the amounts of electric power supply from the plurality of vehicles are allocated appropriately based on the electric-power supply capacity of each of the plurality of vehicles.

Further, in the vehicle in accordance with the present invention, a first connection terminal is connected to an electric load, and another vehicle is connected to a second connection terminal. A system controller determines allocation of amounts of electric power supply from the vehicle and the other vehicle connected to the second connection terminal based on an amount of load on the electric load and an amount of electric power capable of being supplied from each of the vehicle and the other vehicle, operating the electric-power generation device based on the allocation, and outputting an electric power command in accordance with the allocation to the other vehicle.

Therefore, according to the present invention, an electric-power supply system using the vehicle and the other vehicle can be established. As a result, electric power exceeding the electric-power supply capacity of the single vehicle can be supplied to the electric load.

Further, in the vehicle in accordance with the present invention, a connection terminal is connected to another vehicle, and the electric power generated by the electric-power generation device is output via the other vehicle to the electric load. A system controller operates the electric-power generation device based on an electric power command received from the other vehicle.

Therefore, according to the present invention, an electric-power supply system using the other vehicle and the vehicle can be established.

Furthermore, in the vehicle in accordance with the present invention, a first connection terminal is connected to another first vehicle, another second vehicle is connected to a second connection terminal, and the electric power generated by the electric-power generation device is output via the other first vehicle to the electric load. A system controller operates the electric-power generation device based on an electric power command received from the other first vehicle.

Therefore, according to the present invention, an electric-power supply system using the vehicle and the other first and second vehicles can be established.

### Brief Description of the Drawings

Fig. 1 is an overall block diagram of an electric-power supply system in accordance with a first embodiment of the present invention.
Fig. 2 is a schematic block diagram of a hybrid vehicle shown in Fig. 1.
Fig. 3 is a functional block diagram of an ECU shown in Fig. 2.
Fig. 4 is a schematic block diagram of a power output apparatus shown in Fig. 2.
Fig. 5 is a functional block diagram of units involved in AC electric power control in a controller shown in Fig. 4.
Fig. 6 is a waveform diagram showing the total sum of duties on inverters as well as AC voltage and AC current when AC electric power is generated across neutral points of motor generators shown in Fig. 4.
Fig. 7 is an overall block diagram of an electric-power supply system in accordance with a second embodiment of the present invention.
Fig. 8 is a schematic block diagram of an auxiliary electric-power supply apparatus shown in Fig. 7.
Fig. 9 is an overall block diagram of an electric-power supply system in accordance with a third embodiment of the present invention.
Fig.10 is a schematic block diagram of a hybrid vehicle shown in Fig. 9
Fig. 11 is an overall block diagram of an electric-power supply system in accordance with a fourth embodiment of the present invention.
Fig. 12 is a schematic block diagram of an auxiliary electric-power supply apparatus shown in Fig. 11.

### Best Modes for Carrying Out the Invention

In the following, embodiments of the present invention will be described in detail with reference to the drawings, in which identical or corresponding parts will be designated by the same reference numerals, and the description thereof will not be repeated.

### First Embodiment

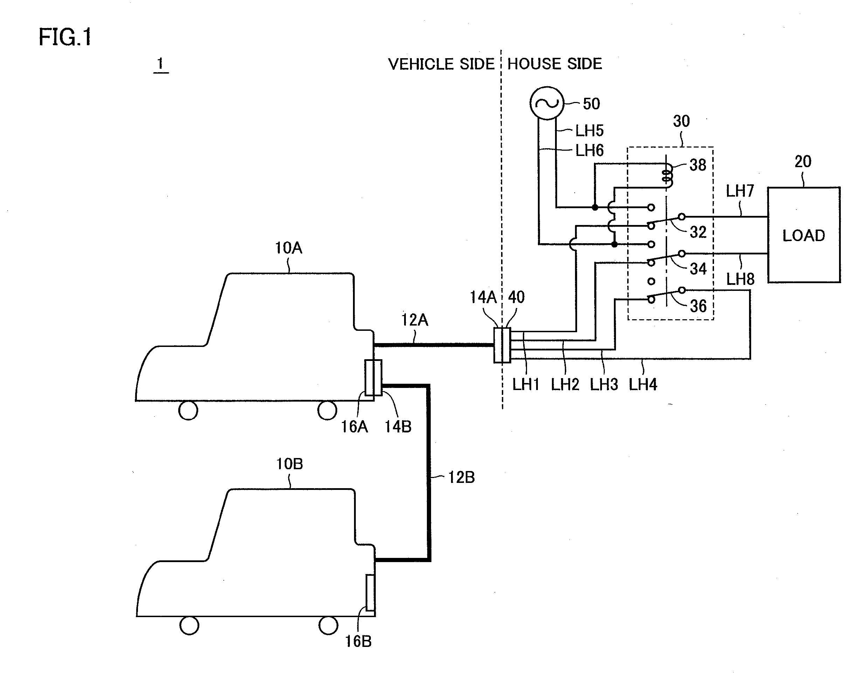

Fig. 1 is an overall block diagram of an electric-power supply system in accordance with a first embodiment of the present invention. Referring to Fig. 1, an electric-power supply system 1 includes hybrid vehicles 10A and 10B, a house load 20, an automatic switching apparatus 30, a connector 40, and house-side lines LH1 to LH8. Hybrid vehicle 10A includes a connection cable 12A, an output-side connector 14A, and an input-side connector 16A. Hybrid vehicle 10B includes a connection cable 12B, an output-side connector 14B, and an input-side connector 16B. Output-side connector 14A of hybrid vehicle 10A is connected to house-side connector 40, and output-side connector 14B of hybrid vehicle 10B is connected to input-side connector 16A of hybrid vehicle 10A.

Hybrid vehicles 10A and 10B are vehicles powered by a DC battery, an inverter, and a motor generator driven by the inverter, in addition to a conventional engine. Specifically, they are powered by driving the engine, and also powered by converting DC voltage from the DC battery into AC voltage by means of the inverter and rotating the motor generator using the converted AC voltage.

Then, hybrid vehicles 10A and 10B generate AC electric power for a commercial electric power source through a method described later, and output the generated AC electric power via connection cables 12A and 12B from output-side connectors 14A and 14B, respectively.

Hybrid vehicles 10A and 10B are electrically connected by connection cable 12B, and connected in parallel within hybrid vehicle 10A with respect to house load 20. That is, AC electric power generated by hybrid vehicle 10B is supplied via hybrid vehicle 10A to house load 20.

The structure of hybrid vehicles 10A and 10B will be described later in detail.

Generally, house load 20 receives AC electric-power supply from a commercial system power source 50. When commercial system power source 50 is interrupted, automatic switching apparatus 30 is activated, and house load 20 receives AC electric power supply from hybrid vehicles 10A and 10B. That is, in electric-power supply system 1, hybrid vehicles 10A and 10B are used as an emergency power source for commercial system power source 50.

Automatic switching apparatus 30 is provided between house load 20 and commercial system power source 50 and between house load 20 and hybrid vehicles 10A and 10B. Automatic switching apparatus 30 includes switches 32, 34 and 36, and a coil 38. Coil 38 is connected to house-side lines LH5 and LH6 connected to commercial system power source 50. Switches 32, 34 and 36 are activated by magnetic power generated when current flows through coil 38. Specifically, switch 32 connects house-side line LH7 connected to house load 20 with house-side line LH5 when current flows through coil 38, and connects house-side line LH7 with house-side line LH1 connected to connector 40 when no current flows through coil 38. Switch 34 connects house-side line LH8 connected to house load 20 with house-side line LH6 when current flows through coil 38, and connects house-side line LH8 with house-side line LH2 connected to connector 40 when no current flows through coil 38. Switch 36 disconnects house-side line LH3 connected to connector 40 from house-side line LH4 when current flows through coil 38, and connects house-side line LH3 with house-side line LH4 when no current flows through coil 38.

In electric-power supply system 1, when commercial system power source 50 is interrupted, house load 20 is electrically connected with connector 40 by automatic switching apparatus 30, and AC electric power is supplied from hybrid vehicles 10A and 10B to house load 20.

In electric-power supply system 1, each of hybrid vehicles 10A and 10B can supply electric power for example up to 3 kW, and thus hybrid vehicles 10A and 10B can supply electric power up to 6 kW in total to house load 20. Hybrid vehicle 10A connected to house-side connector 40 serves as a "master" to hybrid vehicle 10B connected to hybrid vehicle 10A, controlling allocations of the amounts of electric power supply from hybrid vehicles 10A and 10B. It is to be noted that the term "master" refers to controlling the amount of electric power supply from another hybrid vehicle. Further, in the following, a term "slave" refers to having the amount of electric power supply controlled by a hybrid vehicle serving as a master.

Specifically, hybrid vehicle 10A serving as a master determines the allocations of the amounts of electric power supply from hybrid vehicles 10A and 10B based on residual amounts of fuel in hybrid vehicles 10A and 10B, generates AC electric power based on the allocation, and outputs the AC electric power to house load 20. Further, hybrid vehicle 10A outputs an electric power command (a current command) in accordance with the allocation for hybrid vehicle 10B via connection cable 12B to slave hybrid vehicle 10B.

In addition, hybrid.vehicle 10A generates a synchronization signal for synchronizing the phases of the AC electric power to be output from hybrid vehicles 10A and 10B, and outputs the generated synchronization signal via connection cable 12B to hybrid vehicle 10B.

Then, hybrid vehicle 10B serving as a slave generates AC electric power in synchronization with the phase of the AC electric power from hybrid vehicle 10A based on the electric power command (current command) and a synchronization command from hybrid vehicle 10A, and outputs the generated AC electric power via hybrid vehicle 10A to house load 20.

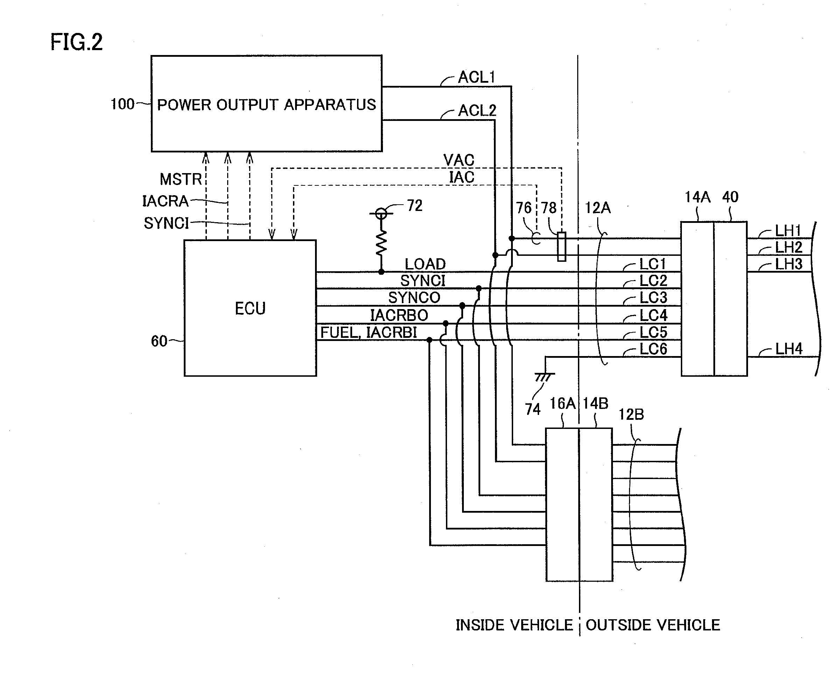

Fig. 2 is a schematic block diagram of hybrid vehicles 10A and 10B shown in Fig. 1. Hybrid vehicles 10A and 10B have the same structure, and Fig. 2 shows the structure of hybrid vehicle 10A as a representative example. Referring to Fig. 2, hybrid vehicle 10A includes a power output apparatus 100, an ECU (Electronic Control Unit) 60, AC lines ACL 1 and ACL2, vehicle-side lines LC 1 to LC6, output-side connector 14A, input-side connector 16A, an electric-power supply node 72, a ground node 74, a current sensor 76, and a voltage sensor 78.

Power output apparatus 100 generates driving force for hybrid vehicle 10A, and produces driving torque in a drive wheel not shown using the generated driving force. Further, when the vehicle stops, power output apparatus 100 generates AC electric power for a commercial power source based on a command from ECU 60, and outputs the generated AC electric power to AC lines ACL1 and ACL2. Specifically, power output apparatus 100 generates AC electric power in an amount determined by ECU 60 based on a current command IACRA from ECU 60. Further, when a master signal MSTR from ECU 60 is at an L (logical low) level, that is, when hybrid vehicle 10A serves as a slave, power output apparatus 100 generates AC electric power in synchronization with a synchronization signal SYNCI from ECU 60.

Current sensor 76 detects AC current IAC supplied to house load 20 from hybrid vehicle 10A and hybrid vehicle 10B connected to input-side connector 16A, and outputs the detected AC current IAC to ECU 60. Voltage sensor 78 detects AC voltage VAC supplied from hybrid vehicles 10A and 10B to house load 20, and outputs the detected AC voltage VAC to ECU 60.

ECU 60 determines whether electric power supply is requested from a house side based on a signal LOAD on vehicle-side line LC1, and also determines whether to cause hybrid vehicle 10A equipped with ECU 60 to serve as a master or as a slave. Specifically, vehicle-side line LC 1 is connected via output-side connector 14A and house-side connector 40 to house-side line LH3, and grounded vehicle-side line LC6 is connected to house-side line LH4. As shown in Fig. 1, when house load 20 receives electric power supply from commercial system power source 50, house-side line LH3 is in a high impedance condition, and thus vehicle-side line LC1 is pulled up to a higher potential by electric-power supply node 72. That is, signal LOAD attains an H (logical high) level. On the other hand, when commercial system power source 50 is interrupted, house-side lines LH3 and LH4 are electrically connected. Since vehicle-side line LC6 connected to house-side line LH4 is grounded, the potential of vehicle-side line LC 1 is pulled down to a ground potential. That is, signal LOAD attains an L level.

When signal LOAD attains an L level, ECU 60 recognizes that electric power supply is requested from the house side. Further, when hybrid vehicle 10A serves as a slave, that is, output-side connector 14A is connected to an input-side connector of the other hybrid vehicle, vehicle-side line LC1 is always in a high impedance condition, and signal LOAD is always at an H level. Therefore, when signal LOAD is at an L level in contrast, ECU 60 causes hybrid vehicle 10A to serve as a master.

Further, when hybrid vehicle 10A serves as a master, ECU 60 determines the allocations of the amounts of electric power supply from hybrid vehicles 10A and 10B based on the amount of load on house load 20 and residual amounts of fuel in hybrid vehicles 10A and 10B. Specifically, ECU 60 calculates the amount of electric power supplied from hybrid vehicles 10A and 10B to house load 20, that is, the amount of load on house load 20, based on AC current IAC from current sensor 76 and AC voltage VAC from voltage sensor 78. Then, ECU 60 computes the allocations of the amounts of electric power supply from hybrid vehicles 10A and 10B based on a residual amount of fuel in hybrid vehicle 10A and a residual amount of fuel designated as FUEL in hybrid vehicle 10B input from input-side connector 16A, and calculates current commands IACRA and IACRBO for hybrid vehicle 10A and 10B in accordance with the computed allocated amounts. Thereafter, ECU 60 outputs current command IACRA to power output apparatus 100, and outputs current command IACRBO through input-side connector 16A to hybrid vehicle 10B.

Furthermore, when hybrid vehicle 10A serves as a master, ECU 60 generates a synchronization signal SYNCO for synchronizing AC electric power to be output from hybrid vehicle 10A and AC electric power to be output from hybrid vehicle 10B, and outputs the generated synchronization signal SYNCO through input-side connector 16A to hybrid vehicle 10B.

On the other hand, when hybrid vehicle 10A serves as a slave, ECU 60 receives synchronization signal SYNCI input through input-side connector 16A, and outputs the received synchronization signal SYNCI to power output apparatus 100. Then, power output apparatus 100 generates AC voltage in synchronization with synchronization signal SYNCI through a method described later. Thereby, power output apparatus 100 can generate AC electric power in synchronization with the phase of AC electric power to be output from the other hybrid vehicle serving as a master.

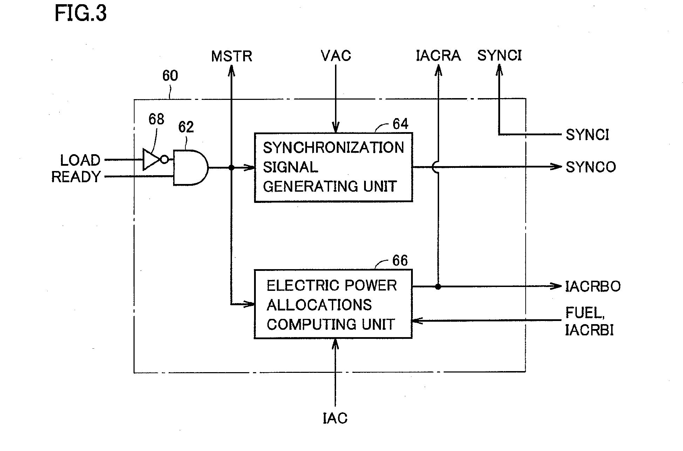

Fig. 3 is a functional block diagram of ECU 60 shown in Fig. 2. Referring to Fig. 3, ECU 60 includes an inverting gate 68, an AND gate 62, a synchronization signal generating unit 64, and an electric power allocations computing unit 66. Inverting gate 68 outputs a signal having an inverted logical level relative to that of signal LOAD supplied from vehicle-side line LC1, to AND gate 62. AND gate 62 computes a logical product of an output signal from inverting gate 68 and a signal READY, and outputs the result of the computation as master signal MSTR. Master signal MSTR is a signal which attains an H level when hybrid vehicle 10A serves as a master.

Synchronization signal generating unit 64 receives master signal MSTR from AND gate 62 and AC voltage VAC from voltage sensor 78. When master signal MSTR is at an H level, synchronization signal generating unit 64 generates synchronization signal SYNCO in synchronization with the phase of AC voltage VAC, and outputs the generated synchronization signal SYNCO to vehicle-side line LC3. Synchronization signal SYNCO is output through input-side connector 16A to hybrid vehicle 10B.

Electric power allocations computing unit 66 receives master signal MSTR from AND gate 62, AC current IAC from current sensor 76, and residual amount of fuel FUEL in hybrid vehicle 10B and a current command IACRBI which are input from input-side connector 16A. When master signal MSTR is at an H level, electric power allocations computing unit 66 calculates the amount of load on house load 20 using AC current IAC, and computes the allocations of the amounts of electric power supply from hybrid vehicles 10A and 10B, based on the calculated amount of load on house load 20 and the residual amount of fuel in hybrid vehicle 10A and residual amount of fuel FUEL in hybrid vehicle 10B.

Then, electric power allocations computing unit 66 generates current commands IACRA and IACRBO for hybrid vehicle 10A and 10B based on the computed allocations of the amounts of electric power supply, and outputs the generated current command IACRA to power output apparatus 100 of hybrid vehicle 10A, and outputs current command IACRBO to vehicle-side line LC4. Current command IACRBO is output through input-side connector 16A to hybrid vehicle 10B.

On the other hand, when master signal MSTR is at an L level, electric power allocations computing unit 66 outputs current command IACRBI received from the other hybrid vehicle serving as a master, as current command IACRA for hybrid vehicle 10A, to power output apparatus 100, without computing electric power allocations.

Further, ECU 60 receives synchronization signal SYNCI output from the other hybrid vehicle serving as a master, and outputs the received synchronization signal SYNCI to power output apparatus 100.

In ECU 60, when master signal MSTR is at an H level, synchronization signal generating unit 64 generates synchronization signal SYNCO, and outputs the generated synchronization signal SYNCO to the other hybrid vehicle serving as a slave. Further, electric power allocations computing unit 66 determines the allocations of the amounts of electric power supply from hybrid vehicles 10A and 10B based on the amount of load on house load 20 and the residual amounts of fuel in hybrid vehicles 10A and 10B, and then outputs current commands in accordance with the allocations to power output apparatus 100 of hybrid vehicle 10A and to the other hybrid vehicle serving as a slave.

On the other hand, when master signal MSTR is at an L level, synchronization signal generating unit 64 is not activated, and thus does not generate synchronization signal SYNCO. Further, electric power allocations computing unit 66 outputs current command IACRBI received from the other hybrid vehicle serving as a master, as current command IACRA for hybrid vehicle 10A, to power output apparatus 100, without computing electric power allocations.

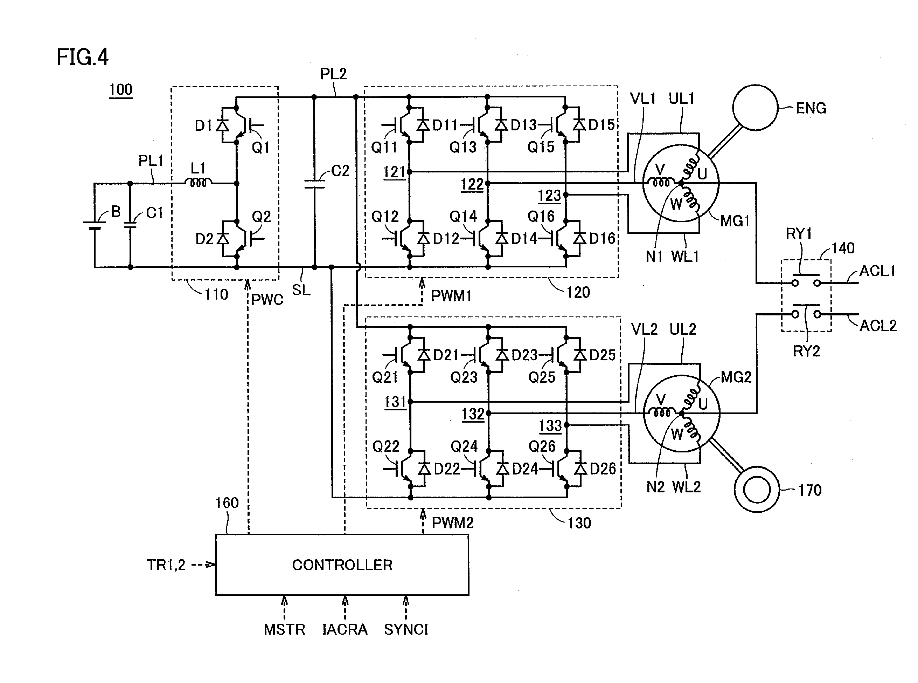

Fig. 4 is a schematic block diagram of power output apparatus 100 shown in Fig. 2. Referring to Fig. 4, power output apparatus 100 includes a battery B, an up-converter 110, inverters 120 and 130, motor generators MG1 and MG2, a relay circuit 140, a controller 160, capacitors C1 and C2, electric power supply lines PL1 and PL2, a ground line SL, U-phase lines UL1 and UL2, V-phase lines VL1 and VL2, and W-phase lines WL1 and WL2.

Battery B, which is a DC electric power source, is for example a secondary battery such as a nickel hydride battery or a lithium ion battery. Battery B outputs generated DC voltage to up-converter 110. Further, battery B is charged with DC voltage output from up-converter 110.

Up-converter 110 includes a reactor L1, npn-type transistors Q1 and Q2, and diodes D1 and D2. Reactor L1 has one end connected to electric power supply line PL1, and the other end connected to a connection point between npn-type transistors Q 1 and Q2. The npn-type transistors Q 1 and Q2 are for example IGBTs (Insulated Gate Bipolar Transistors), and connected in series between electric power supply line PL2 and ground line SL. The bases of npn-type transistors Q 1 and Q2 receive a signal PWC from controller 160. Diodes D1 and D2 are connected between the collector and the emitter of npn-type transistors Q and Q2, respectively, so that current flows from the emitter side to the collector side.

Up-converter 110 up-converts the DC voltage supplied from battery B for output to electric power supply line PL2. More specifically, in response to signal PWC from controller 160, up-converter 110 up-converts the DC voltage from battery B by storing in reactor L1 current flowing in accordance with the switching operation of npn-type transistor Q2 as magnetic field energy, and outputs the up-converted voltage via diode D 1 to electric power supply line PL2 in synchronization with the timing when npn-type transistor Q2 is turned off. Further, in response to signal PWC from controller 160, up-converter 110 down-converts DC voltage supplied from inverters 120 and/or 130 to have a voltage level of battery B, and charges battery B.

Inverter 120 includes an U-phase arm 121, a V-phase arm 122, and a W-phase arm 123. U-phase arm 121, V-phase arm 122, and W-phase arm 123 are connected in parallel between electric power supply line PL2 and ground line SL. U-phase arm 121 includes npn-type transistors Q11 and Q12 connected in series, V-phase arm 122 includes npn-type transistors Q 13 and Q 14 connected in series, and W-phase arm 123 includes npn-type transistors Q 15 and Q16 connected in series. Each of npn-type transistors Q11 to Q16 is for example an IGBT. Between the collector and the emitter of npn-type transistors Q11 to Q16, diodes D11 to D16 passing current from the emitter side to the collector side are connected, respectively. Each connection point between the npn-type transistors in each phase arm is connected, via U-phase line UL1, V-phase line VL1, or W-phase lines WL1, to a coil end opposite to a neutral point N1 for each phase coil in motor generator MG1.

In response to a signal PWM1 from controller 160, inverter 120 converts the DC voltage supplied from electric power supply line PL2 into three-phase AC voltage, and drives motor generator MG1. Thereby, motor generator MG1 is driven to produce torque designated by a torque control value TR1. Further, inverter 120 converts three-phase AC voltage generated by motor generator MG1 using output from an engine ENG into DC voltage in response to signal PWM1 from controller 160, and outputs the converted DC voltage to electric power supply line PL2.

Inverter 130 includes an U-phase arm 131, a V-phase arm 132, and a W-phase arm 133. U-phase arm 131, V-phase arm 132, and W-phase arm 133 are connected in parallel between electric power supply line PL2 and ground line SL. U-phase arm 131 includes npn-type transistors Q21 and Q22 connected in series, V-phase arm 132 includes npn-type transistors Q23 and Q24 connected in series, and W-phase arm 133 includes npn-type transistors Q25 and Q26 connected in series. Each of npn-type transistors Q21 to Q26 is also an IGBT, for example. Between the collector and the emitter of npn-type transistors Q21 to Q26, diodes D21 to D26 passing current from the emitter side to the collector side are connected, respectively. Also in inverter 130, each connection point between the npn-type transistors in each phase arm is connected, via U-phase line UL2, V-phase line VL2, or W-phase lines WL2, to a coil end opposite to a neutral point N2 for each phase coil in motor generator MG2.

In response to a signal PWM2 from controller 160, inverter 130 converts the DC voltage supplied from electric power supply line PL2 into three-phase AC voltage, and drives motor generator MG2. Thereby, motor generator MG2 is driven to produce torque designated by a torque control value TR2. Further, when regenerative braking is performed in a vehicle, inverter 130 converts three-phase AC voltage generated by motor generator MG2 using rotary force of a drive wheel 170 into DC voltage in response to signal PWM2 from controller 160, and outputs the converted DC voltage to electric power supply line PL2.

Capacitor C1 is connected between electric power supply line PL1 and ground line SL to smooth voltage fluctuations between electric power supply line PL1 and ground line SL. Capacitor C2 is connected between electric power supply line PL2 and ground line SL to smooth voltage fluctuations between electric power supply line PL2 and ground line SL.

Motor generators MG1 and MG2 are for example three-phase AC synchronous electric motors, and each of them includes a three-phase coil in Y connection as a stator coil. Motor generators MG1 and MG2 are coupled to engine ENG and drive wheel 170, respectively. Motor generator MG1 is driven by inverter 120, generates the three-phase AC voltage using the output from engine ENG, and outputs the generated three-phase AC voltage to inverter 120. Further, motor generator MG1 generates driving force using the three-phase AC voltage supplied from inverter 120 to start engine ENG. Motor generator MG2 is driven by inverter 130, and produces driving torque for a vehicle using the three-phase AC voltage supplied from inverter 130. Further, when regenerative braking is performed in a hybrid vehicle, motor generator MG2 generates the three-phase AC voltage and outputs it to inverter 130.

AC lines ACL 1 and ACL2 are connected via relay circuit 140 to neutral point N1 in motor generator MG1 and neutral point N2 in motor generator MG2, respectively. Motor generators MG1 and MG2 output AC electric power generated across neutral points N1 and N2 through a method described later to AC lines ACL1 and ACL2.

Relay circuit 140 includes relays RY1 and RY2. Relay circuit 140 connects/disconnects neutral point N1 in motor generator MG1 and neutral point N2 in motor generator MG2 to/from AC lines ACL1 and ACL2, respectively, in accordance with an operation command from controller 160.

Controller 160 generates signal PWC for driving up-converter 110 based on torque control values TR1 and TR2 and motor rotation rates of motor generators MG1 and MG2, battery voltage of battery B, and output voltage of up-converter 110 (equivalent to input voltage of inverters 120 and 130; hereinafter the same applies), and outputs the generated signal PWC to up-converter 110. It is to be noted that the motor rotation rates of motor generators MG1 and MG2, the battery voltage of battery B, and the output voltage of up-converter 110 are each detected by a sensor not shown.

Further, controller 160 generates signal PWM1 for driving motor generator MG1 based on the input voltage of inverter 120 and motor current and torque control value TR1 of motor generator MG1, and outputs the generated signal PWM1 to inverter 120. Furthermore, controller 160 generates signal PWM2 for driving motor generator MG2 based on the input voltage of inverter 130 and motor current and torque control value TR2 of motor generator MG2, and outputs the generated signal PWM2 to inverter 130. It is to be noted that the motor current of motor generator MG1 and the motor current of motor generator MG2 are detected by a sensor not shown.

On this occasion, when controller 160 is receiving current command IACRA for generating AC electric power from ECU 60 (not shown; hereinafter the same applies), controller 160 generates signals PWM1 and PWM2 for controlling inverters 120 and 130 to generate AC electric power in accordance with current command IACRA across neutral point N1 in motor generator MG1 and neutral point N2 in motor generator MG2.

Further, on this occasion, when master signal MSTR from ECU 60 is at an L level, controller 160 controls inverters 120 and 130 to synchronize the phase of the AC electric power to be generated across neutral point N1 in motor generator MG1 and neutral point N2 in motor generator MG2 to synchronization signal SYNCI from ECU 60.

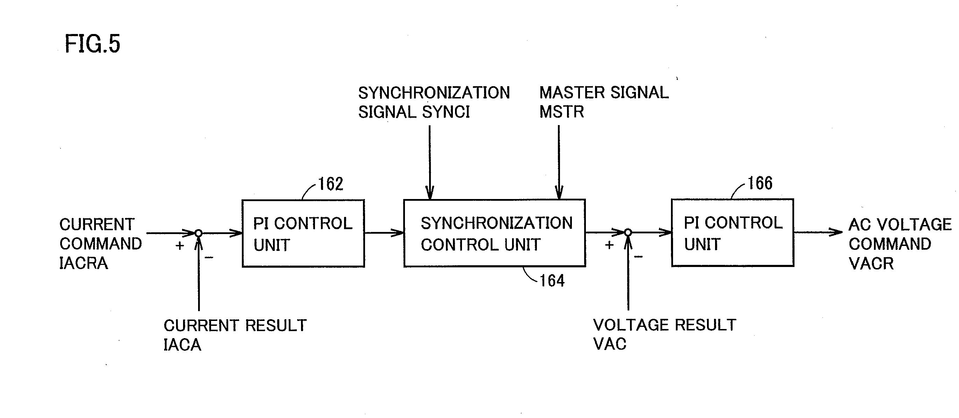

Fig. 5 is a functional block diagram of units involved in AC electric power control in controller 160 shown in Fig. 4. Referring to Fig. 5, controller 160 includes PI control units 162 and 166, and a synchronization control unit 164. PI control unit 162 receives a deviation between current command IACRA from ECU 60 and a current result IACA output from the neutral points in motor generators MG1 and MG2, performs proportional-plus-integral control using the deviation as an input, and outputs the result of the control to synchronization control unit 164.

Synchronization control unit 164 receives synchronization signal SYNCI and master signal MSTR from ECU 60. When master signal MSTR is at an L level, synchronization control unit 164 synchronizes the phase of a voltage command supplied from PI control unit 162 to synchronization signal SYNCI for output. On the other hand, when master signal MSTR is at an H level, synchronization control unit 164 directly outputs the voltage command supplied from PI control unit 162.

PI control unit 166 receives a deviation between the voltage command from synchronization control unit 164 and a voltage result VAC output from the neutral points in motor generators MG1 and MG2, performs proportional-plus-integral control using the deviation as an input, and outputs the result of the control as a final AC voltage command VACR.

Specifically, in controller 160, AC electric power control is implemented by providing a current control loop outside a voltage control loop. Further, when master signal MSTR is at an L level, that is, when hybrid vehicle 10A serves as a slave, synchronization signal SYNCI is used as information of the phase of AC voltage to be output from power output apparatus 100.

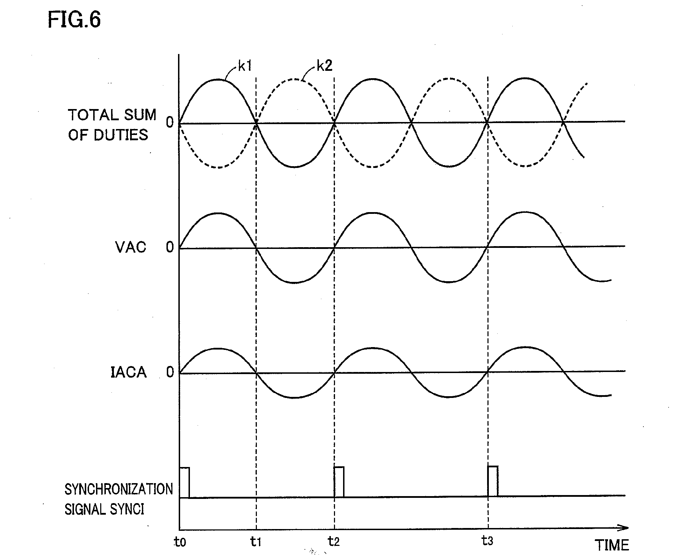

Fig. 6 is a waveform diagram showing the total sum of duties on inverters 120 and 130 as well as AC voltage VAC and AC current IACA when AC electric power is generated across neutral point N1 in motor generator MG1 and neutral point N2 in motor generator MG2 shown in Fig. 4. Referring to Fig. 6, a curve k1 represents change in the total sum of duties when inverter 120 performs switching control, and a curve k2 represents change in the total sum of duties when inverter 130 performs switching control. Here, the total sum of duties is obtained by subtracting the on-duties of lower arms from the on-duties of upper arms in each inverter. In Fig. 6, when the total sum of duties is positive, it means that the neutral point in a corresponding motor generator has a potential higher than an intermediate potential of the input voltage of inverter 120, 130, and when the total sum of duties is negative, it means that the neutral point has a potential lower than the intermediate potential of the input voltage of inverter 120, 130.

When controller 160 generates the AC electric power across neutral point N1 in motor generator MG1 and neutral point N2 in motor generator MG2, controller 160 changes the total sum of duties on inverter 120 in accordance with curve k1 changing at a commercial AC frequency, and changes the total sum of duties on inverter 130 in accordance with curve k2 changing at the commercial AC frequency. Here, curve k2 is a curve having an inverted phase relative to that of curve k1. That is, the total sum of duties on inverter 130 is periodically changed, having an inverted phase relative to the phase in which the total sum of duties on inverter 120 changes. Further, controller 160 synchronizes the phases of curves k1 and k2 to synchronization signal SYNCI.

In that case, from time t0 to t1, neutral point N1 has a potential higher than the intermediate potential of the input voltage of inverter 120, 130, and neutral point N2 has a potential lower than the intermediate potential, and thus positive AC voltage VAC is generated across neutral points N1 and N2. Then, excess current which cannot flow from the upper arms to the lower arms in inverter 120 flows as AC current IACA from neutral point N1 to neutral point N2 via AC line ACL1, house load 20, and AC line ACL2, and flows from neutral point N2 to the lower arms in inverter 130.

From time t1 to t2, neutral point N1 has a potential lower than the intermediate potential of the input voltage of inverter 120, 130, and neutral point N2 has a potential higher than the intermediate potential, and thus negative AC voltage VAC is generated across neutral points N1 and N2. Then, excess current which cannot flow from the upper arms to the lower arms in inverter 130 flows as AC current IACA from neutral point N2 to neutral point N1 via AC line ACL2, house load 20, and AC line ACL1, and flows from neutral point N1 to the lower arms in inverter 120.

The magnitude of AC electric power supplied from power output apparatus 100 to house load 20 depends on the magnitude of AC electric power IACA, and the magnitude of AC electric power IACA is determined by the magnitude of a difference between the total sum of duties on inverter 120 changing in accordance with curve k1 and the total sum of duties on inverter 130 changing in accordance with curve k2, that is, the magnitude of an amplitude of curves k1 and k2. Consequently, the amount of AC electric power supplied from power output apparatus 100 to house load 20 can be controlled by adjusting the amplitude of curves k1 and k2.

In this manner, AC electric power is generated across neutral point N1 in motor generator MG1 and neutral point N2 in motor generator MG2. The AC electric power is controlled at current command IACRA from ECU 60, and power output apparatus 100 outputs AC electric power in accordance with the allocation of the amount of electric power supply determined by ECU 60.

In the above description, when the amount of load on house load 20 is lower than 3 kW, it is preferable that, in computing the electric power allocations, ECU 60 allocates the amounts of electric power supply such that AC electric power is generated only from hybrid vehicle 10B serving as a slave. Thereby, even when hybrid vehicle 10B runs out of fuel and is separated from hybrid vehicle 10A to be refueled at a fuel station, electric power can be supplied continuously to house load 20 from hybrid vehicle 10A connected to house-side connector 40.

Although two hybrid vehicles 10A and 10B are used to establish the electric-power supply system in the above description, three or more hybrid vehicles may be used to establish the electric-power supply system.

In the above description, ECU 60 corresponds to the "system controller" in the present invention, and power output apparatus 100 corresponds to the "electric-power generation device" in the present invention. Motor generators MG1 and MG2 correspond to the "generator" and the "electric motor" in the present invention, respectively. Inverters 120 and 130 correspond to the "first inverter" and the "second inverter" in the present invention, respectively. Output-side connector 14A corresponds to the "first connection terminal" or the "connection terminal" in the present invention, and input-side connector 16A corresponds to the "second connection terminal" in the present invention.

As described above, according to the first embodiment, electric power in an amount exceeding the electric-power supply capacity of each of hybrid vehicles 10A and 10B can be supplied to house load 20 by connecting hybrid vehicles 10A and 10B.

On this occasion, AC electric power can be supplied to house load 20, with AC electric power to be output from hybrid vehicle 10A synchronized with AC electric power to be output from hybrid vehicle 10B.

Further, the AC electric power can be supplied to house load 20, with the amounts of electric power supply from hybrid vehicles 10A and 10B allocated appropriately based on the residual amounts of fuel in hybrid vehicles 10A and 10B.

Furthermore, since each of hybrid vehicles 10A and 10B generates AC electric power across neutral point N1 in motor generator MG1 and neutral point N2 in motor generator MG2 provided in power output apparatus 100 and outputs the AC electric power, there is no need to provide an inverter exclusively for generating AC electric power to be supplied to house load 20.

### Second Embodiment

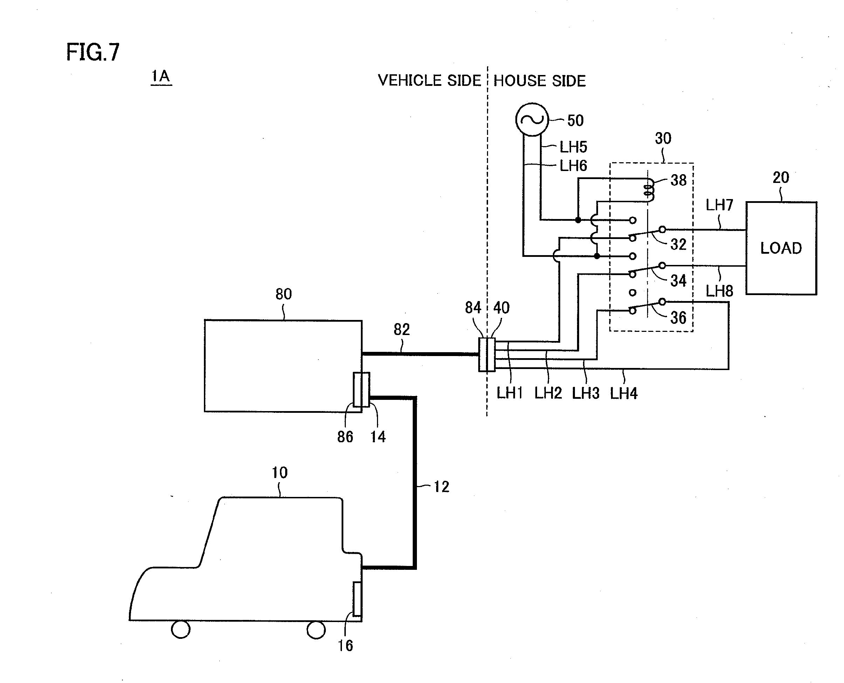

Fig. 7 is an overall block diagram of an electric-power supply system in accordance with a second embodiment of the present invention. Referring to Fig. 7, an electric-power supply system 1A includes an auxiliary electric-power supply apparatus 80, a hybrid vehicle 10, house load 20, automatic switching apparatus 30, connector 40, and house-side lines LH1 to LH8. Auxiliary electric-power supply apparatus 80 includes a connection cable 82, an output-side connector 84, and an input-side connector 86, and hybrid vehicle 10 includes a connection cable 12, an output-side connector 14, and an input-side connector 16. Output-side connector 84 of auxiliary electric-power supply apparatus 80 is connected to house-side connector 40, and output-side connector 14 of hybrid vehicle 10 is connected to input-side connector 86 of auxiliary electric-power supply apparatus 80.

The structure of hybrid vehicle 10 is the same as the structure of hybrid vehicles 10A and 10B in the first embodiment. The house-side structure is also the same as that in the first embodiment.

Auxiliary electric-power supply apparatus 80 generates AC electric power for a commercial electric power source, and outputs the generated AC electric power via connection cable 82 from output-side connector 84. Auxiliary electric-power supply apparatus 80 and hybrid vehicle 10 are electrically connected by connection cable 12 of hybrid vehicle 10, and connected in parallel within auxiliary electric-power supply apparatus 80 with respect to house load 20. That is, AC electric power generated by hybrid vehicle 10 is supplied via auxiliary electric-power supply apparatus 80 to house load 20.

Further, auxiliary electric-power supply apparatus 80 is provided therein with a battery not shown, and is charged with electric power supplied from hybrid vehicle 10 when the SOC (State of Charge) of the battery is reduced.

In electric-power supply system 1A, when commercial system power source 50 is interrupted, house load 20 is electrically connected to connector 40 by automatic switching apparatus 30, and AC electric power is supplied from auxiliary electric-power supply apparatus 80 and hybrid vehicle 10 to house load 20.

Auxiliary electric-power supply apparatus 80 can also supply the same amount of electric power as hybrid vehicle 10, for example up to 3 kW, and thus auxiliary electric-power supply apparatus 80 and hybrid vehicle 10 can supply electric power up to 6 kW in total to house load 20. Auxiliary electric-power supply apparatus 80 connected to house-side connector 40 serves as a "master" to hybrid vehicle 10, controlling allocations of the amounts of electric power supply from auxiliary electric-power supply apparatus 80 and hybrid vehicle 10.

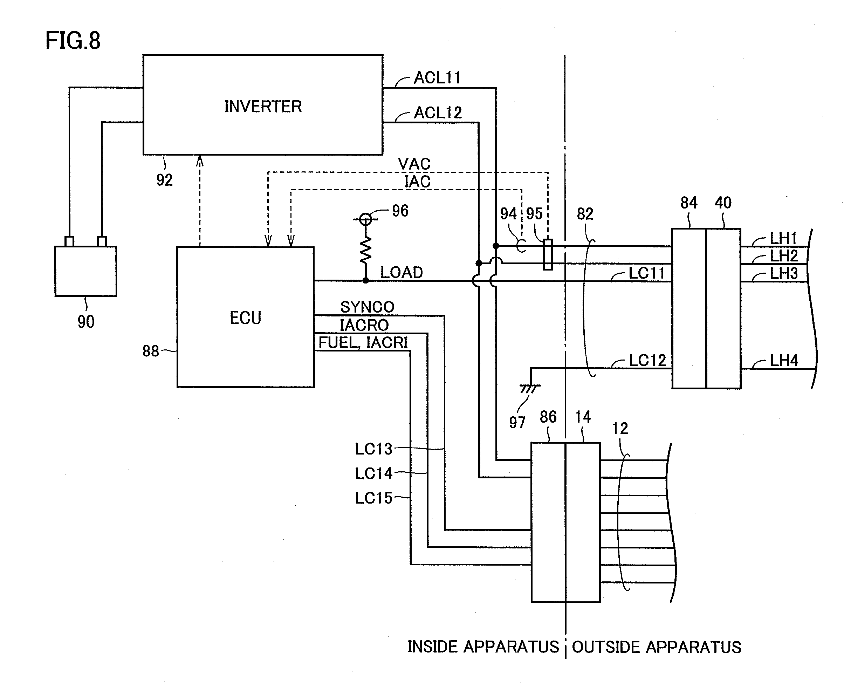

Fig. 8 is a schematic block diagram of auxiliary electric-power supply apparatus 80 shown in Fig. 7. Referring to Fig. 8, auxiliary electric-power supply apparatus 80 includes a battery 90, an inverter 92, an ECU 88, AC lines ACL11 and ACL12, vehicle-side lines LC 11 to LC 15, output-side connector 84, input-side connector 86, a current sensor 94, a voltage sensor 95, an electric-power supply node 96, and a ground node 97.

Battery 90, which is a DC electric power source, is a chargeable and dischargeable secondary battery. Battery 90 outputs generated DC voltage to inverter 92. Further, battery 90 is charged with DC voltage output from inverter 92. Inverter 92 converts the DC electric power supplied from battery 90 into AC electric power for a commercial power source based on an operation command from ECU 88, and outputs the converted AC electric power to AC lines ACL1 and ACL12. Further, inverter 92 receives AC electric power from hybrid vehicle 10 not shown through AC lines ACL11 and ACL12, converts the received AC electric power into DC electric power based on an operation command from ECU 88, and charges battery 90.

Current sensor 94 detects AC current IAC supplied to house load 20 from auxiliary electric-power supply apparatus 80 and hybrid vehicle 10 connected to input-side connector 86, and outputs the detected AC current IAC to ECU 88. Voltage sensor 95 detects AC voltage VAC supplied from auxiliary electric-power supply apparatus 80 and hybrid vehicle 10 to house load 20, and outputs the detected AC voltage VAC to ECU 88.

ECU 88 determines whether electric power supply is requested from the house side based on signal LOAD on vehicle-side line LC11. Since the method of generating signal LOAD is the same as that in the first embodiment, the description thereof will not be repeated.

Further, ECU 88 determines the allocations of the amounts of electric power supply from auxiliary electric-power supply apparatus 80 and hybrid vehicle 10 based on the amount of load on house load 20, the SOC of battery 90, and a residual amount of fuel in hybrid vehicle 10. Specifically, ECU 88 calculates the amount of electric power supplied from auxiliary electric-power supply apparatus 80 and hybrid vehicle 10 to house load 20, that is, the amount of load on house load 20, based on AC current IAC from current sensor 94 and AC voltage VAC from voltage sensor 95.

When the amount of load on house load 20 exceeds 3 kW, ECU 88 outputs an operation command to inverter 92 and outputs a current command IACRO through input-side connector 86 to hybrid vehicle 10 in order to supply electric power to house load 20 using auxiliary electric-power supply apparatus 80 and hybrid vehicle 10.

On the other hand, when the amount of load on house load 20 is not more than 3 kW, ECU 88 outputs an operation command to inverter 90 and sets current command IACRO output to hybrid vehicle 10 at 0. That is, when the amount of load on house load 20 is not more than 3 kW, electric power is supplied to house load 20 only from auxiliary electric-power supply apparatus 80.

Further, when the SOC of battery 90 is reduced, ECU 88 outputs current command IACRO through input-side connector 86 to hybrid vehicle 10 in order to request hybrid vehicle 10 to output AC electric power. Then, ECU 88 outputs an operation command to inverter 90 to convert the AC electric power from hybrid vehicle 10 into DC current and charge battery 90.

Furthermore, when the SOC of battery 90 is reduced and hybrid vehicle 10 is not connected to auxiliary electric-power supply apparatus 80, ECU 88 activates an alarm apparatus not shown to inform the house side that the capacity of supplying electric power to house load 20 is reduced.

Further, ECU 88 generates synchronization signal SYNCO for synchronizing the AC electric power to be output from auxiliary electric-power supply apparatus 80 and the AC electric power to be output from hybrid vehicle 10, and outputs the generated synchronization signal SYNCO through input-side connector 86 to hybrid vehicle 10. Thereby, hybrid vehicle 10 can generate the AC electric power in synchronization with the phase of the AC electric power to be output from auxiliary electric-power supply apparatus 80.

It is to be noted that the capacity of battery 90 in auxiliary electric-power supply apparatus 80 is determined for example by taking into account the period of time required to drive to the nearest fuel station to refuel hybrid vehicle 10 and drive back.

Although auxiliary electric-power supply apparatus 80 and one hybrid vehicle 10 are used to establish the electric-power supply system in the above description, auxiliary electric-power supply apparatus 80 and two or more hybrid vehicles may be used to establish the electric-power supply system.

As described above, according to the second embodiment, electric power in an amount exceeding the electric-power supply capacity of each of auxiliary electric-power supply apparatus 80 and hybrid vehicle 10 can be supplied to house load 20 by connecting hybrid vehicle 10 to auxiliary electric-power supply apparatus 80.

Further, since auxiliary electric-power supply apparatus 80 is permanently installed, even when commercial system power source 50 is suddenly interrupted while hybrid vehicle 10 is in use (that is, while hybrid vehicle 10 is separated from auxiliary electric-power supply apparatus 80 to be used for driving), electric power can be supplied from auxiliary electric-power supply apparatus 80 to house load 20.

### Third Embodiment

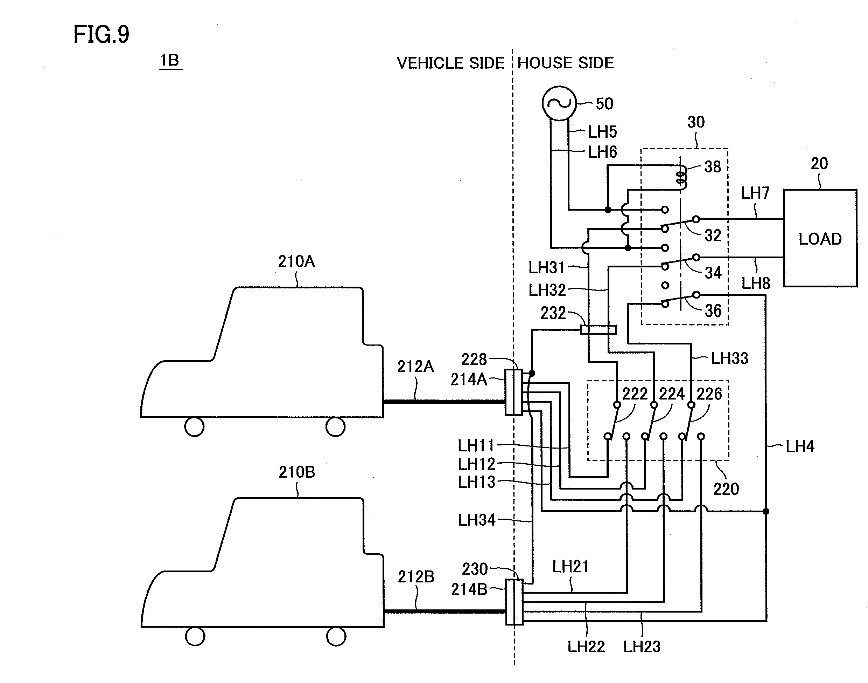

Fig. 9 is an overall block diagram of an electric-power supply system in accordance with a third embodiment of the present invention. Referring to Fig. 9, an electric-power supply system 1B includes hybrid vehicles 210A and 210B, house load 20, automatic switching apparatus 30, a switch set 220, connectors 228 and 230, a voltage sensor 232, and house-side lines LH4 to LH8, LH11 to LH13, LH21 to LH23, and LH31 to LH34. Hybrid vehicle 210A includes a connection cable 212A and a connector 214A, and hybrid vehicle 210B includes a connection cable 212B and a connector 214B. Connector 214A of hybrid vehicle 210A is connected to house-side connector 228, and connector 214B of hybrid vehicle 210B is connected to house-side connector 230.

Hybrid vehicles 210A and 210B generate AC electric power for a commercial electric power source, and output the generated AC electric power via connection cables 212A and 212B from connectors 214A and 214B, respectively.

Switch set 220 is provided between automatic switching circuit 30 and hybrid vehicles 210A, 210B, and includes switches 222, 224 and 226. Switches 222, 224 and 226 are activated in association with each other, and connect house-side lines LH31 to LH33 to house-side lines LH11 to LH13 or house-side lines LH21 to LH23, respectively, in accordance with a switching operation.

Voltage sensor 232 detects AC voltage VAC supplied from hybrid vehicle 210A or 210B to house load 20, and outputs the detected AC voltage VAC to hybrid vehicles 210A and 210B connected to connectors 228 and 230, respectively.

In electric-power supply system 1B, when commercial system power source 50 is interrupted while house-side lines LH31 to LH33 are connected to house-side lines LH11 to LH13, respectively, by switch set 220, house load 20 is electrically connected with hybrid vehicle 210A connected to connector 228, and AC electric power is supplied from hybrid vehicle 210A to house load 20.

On the other hand, when commercial system power source 50 is interrupted while house-side lines LH31 to LH33 are connected to house-side lines LH21 to LH23, respectively, by switch set 220, house load 20 is electrically connected with hybrid vehicle 210B connected to connector 230, and AC electric power is supplied from hybrid vehicle 210B to house load 20.

In electric-power supply system 1B, hybrid vehicles 210A and 210B receive AC voltage VAC from voltage sensor 232 via connection cables 212A and 212B, respectively. When switch set 220 performs switching, the hybrid vehicle which starts supplying electric power after the switching outputs AC electric power in synchronization with the phase of AC voltage VAC which has been supplied from the other hybrid vehicle before the switching. This prevents deviation of the phases of AC electric power when switch set 220 performs switching.

Further, in electric-power supply system 1B, switch set 220 appropriately performs switching between hybrid vehicles 210A and 210B based on the electric power supply capacities of hybrid vehicles 210A and 210B, specifically based on the residual amounts of fuel in hybrid vehicles 210A and 210B. Consequently, even when one of hybrid vehicles 210A and 210B runs out of fuel, AC electric power can be supplied continuously from the other hybrid vehicle to house load 20.

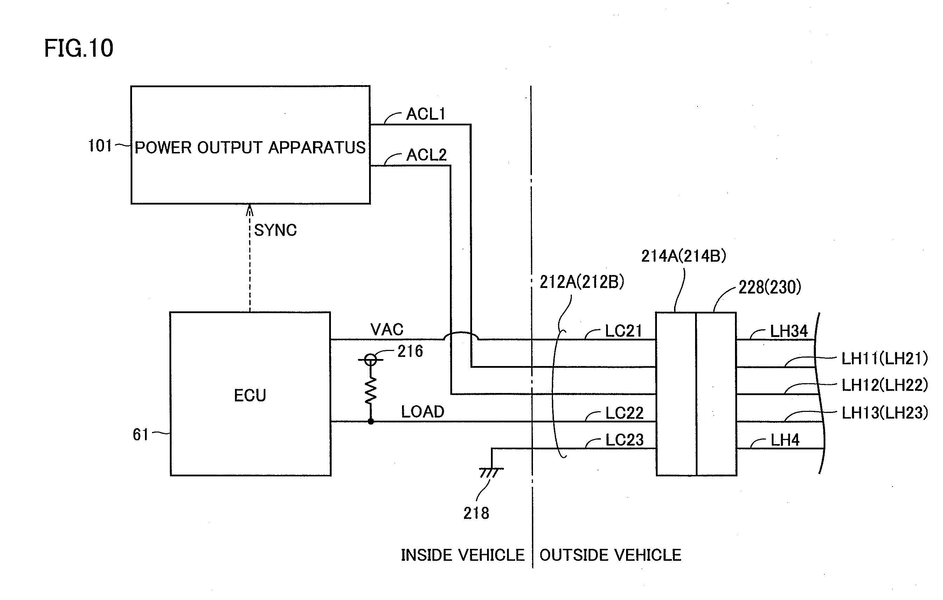

Fig. 10 is a schematic block diagram of hybrid vehicles 210A and 210B shown in Fig. 9. Hybrid vehicles 210A and 210B have the same structure, and Fig. 10 shows the structure of hybrid vehicle 210A as a representative example. Referring to Fig. 10, hybrid vehicle 210A includes a power output apparatus 101, an ECU 61, AC lines ACL 1 and ACL2, vehicle-side lines LC21 to LC23, a connector 214A, an electric-power supply node 216, and a ground node 218.

Power output apparatus 101 generates driving force for hybrid vehicle 210A, and produces driving torque in a drive wheel not shown using the generated driving force. Further, when the vehicle stops, power output apparatus 101 generates AC electric power for a commercial power source based on a command from ECU 61, and outputs the generated AC electric power to AC lines ACL1 and ACL2. On this occasion, power output apparatus 101 receives a synchronization signal SYNC from ECU 61, and generates the AC electric power in synchronization with the received synchronization signal SYNC.

ECU 61 determines whether electric power supply is requested from the house side based on signal LOAD on vehicle-side line LC22. Specifically, vehicle-side line LC22 is connected to house-side line LH13 via connectors 214A and 228, and grounded vehicle-side line LC23 is connected to house-side line LH4. As shown in Fig. 9, when house load 20 receives electric power supply from commercial system power source 50, house-side line LH13 is in a high impedance condition, and thus vehicle-side line LC22 is pulled up to a higher potential by electric-power supply node 216. That is, signal LOAD attains an H level. On the other hand, when commercial system power source 50 is interrupted, house-side line LH13 is electrically connected with house-side line LH4 via switches 226 and 36. Since vehicle-side line LC23 connected to house-side line LH4 is grounded, the potential of vehicle-side line LC22 is pulled down to a ground potential. That is, signal LOAD attains an L level. When signal LOAD attains an L level, ECU 61 recognizes that electric power supply is requested from the house side.

Further, ECU 61 receives AC voltage VAC from voltage sensor 232 via house-side line LH34, connectors 228 and 214A, and vehicle-side line LC 21, generates synchronization signal SYNC in synchronization with the phase of the received AC voltage VAC, and outputs synchronization signal SYNC to power output apparatus 101. More specifically, ECU 61 generates synchronization signal SYNC in synchronization with AC voltage VAC from the other hybrid vehicle generated before connection is switched to hybrid vehicle 210A by house-side switch set 220 (not shown). Thereby, when connection is switched to hybrid vehicle 210A by switch set 220, power output apparatus 101 can generate AC electric power in synchronization with AC voltage VAC generated before the switching. It is to be noted that, since synchronization signal SYNC is a signal required when switch set 220 performs switching as described above, ECU 61 does not have to generate synchronization signal SYNC in particular after power output apparatus 101 starts outputting AC voltage.

Although not described in detail, power output apparatus 101 has the same structure as that of power output apparatus 100. It uses motor generators MG1 and MG2 to generate power, and generates AC electric power for a commercial power source across neutral point N1 in motor generator MG1 and neutral point N2 in motor generator MG2 and outputs the generated AC electric power to AC lines ACL 1 and ACL2.

Although two hybrid vehicles 210A and 210B are used to establish the electric-power supply system in the above description, three or more hybrid vehicles may be used to establish the electric-power supply system.

As described above, according to the third embodiment, switch set 220 is provided to select one of hybrid vehicles 210A and 210B and connect it to house load 20. Therefore, even when one of hybrid vehicles 210A and 210B is separated to be refueled, electric power can be supplied continuously from the other hybrid vehicle to house load 20.

Further, since hybrid vehicles 210A and 210B have a function of synchronization when switch set 220 performs switching, synchronization between AC electric power before the switching and AC electric power after the switching by switch set 220 can be ensured.

### Fourth Embodiment

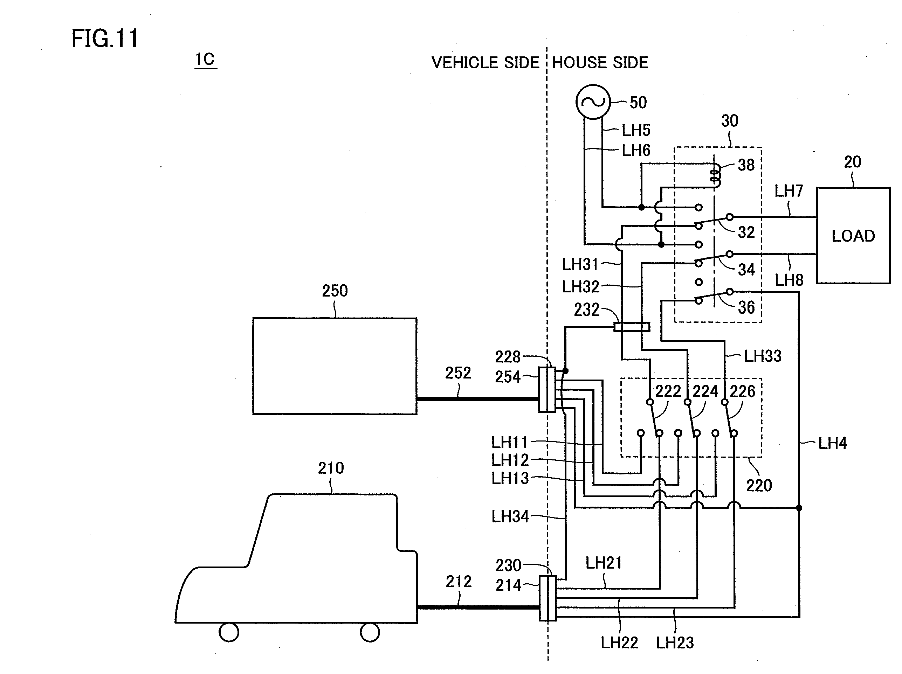

Fig. 11 is an overall block diagram of an electric-power supply system in accordance with a fourth embodiment of the present invention. Referring to Fig. 11, an electric-power supply system 1C includes an auxiliary electric-power supply apparatus 250, a hybrid vehicle 210, house load 20, automatic switching apparatus 30, switch set 220, connectors 228 and 230, voltage sensor 232, and house-side lines LH4 to LH8, LH11 to LH13, LH21 to LH23, and LH31 to LH34. Auxiliary electric-power supply apparatus 250 includes a connection cable 252 and a connector 254, and hybrid vehicle 210 includes a connection cable 212 and a connector 214. Connector 254 of auxiliary electric-power supply apparatus 250 is connected to house-side connector 228, and connector 214 of hybrid vehicle 210 is connected to house-side connector 230.

The structure of hybrid vehicle 210 is the same as the structure of hybrid vehicles 210A and 210B in the third embodiment. The house-side structure is also the same as that in the third embodiment.

Auxiliary electric-power supply apparatus 250 generates AC electric power for a commercial electric power source, and outputs the generated AC electric power via connection cable 252 from connector 254. Auxiliary electric-power supply apparatus 250 is used as a back-up power source for hybrid vehicle 210 serving as an electric-power supply apparatus when commercial system power source 50 is interrupted. It generates AC electric power for example when hybrid vehicle 210 is being refueled, and outputs the AC electric power to house load 20.

Also in electric-power supply system 1C, when commercial system power source 50 is interrupted, hybrid vehicle 210 or auxiliary electric-power supply apparatus 250 selected by switch set 220 is electrically connected with house load 20, as in electric-power supply system 1B in the third embodiment.

Also, as with hybrid vehicle 210, auxiliary electric-power supply apparatus 250 receives AC voltage VAC from voltage sensor 232 via connection cable 252. When connection is switched by switch set 220 from hybrid vehicle 210 to auxiliary electric-power supply apparatus 250, auxiliary electric-power supply apparatus 250 generates AC electric power in synchronization with the phase of AC voltage VAC which has been supplied from hybrid vehicle 210. This prevents deviation of the phases of AC electric power when switch set 220 performs switching.

Electric-power supply system 1C may be used for example in a situation described below. When house load 20 receives electric power from commercial system power source 50, automatic switching circuit 30 is connected with connector 230 for hybrid vehicle 210 by switch set 220. Thereby, when commercial system power source 50 is interrupted, electric power is firstly supplied from hybrid vehicle 210 to house load 20. Thereafter, when the residual amount of fuel in hybrid vehicle 210 is reduced and hybrid vehicle 210 is required to be refueled at the nearest fuel station, switch set 220 is switched to connect house load 20 with auxiliary electric-power supply apparatus 250, and electric power is supplied from auxiliary electric-power supply apparatus 250 to house load 20 while hybrid vehicle 210 is being refueled. Thereby, even when hybrid vehicle 210 runs out of fuel, electric power can be supplied continuously from auxiliary electric-power supply apparatus 250 to house load 20.

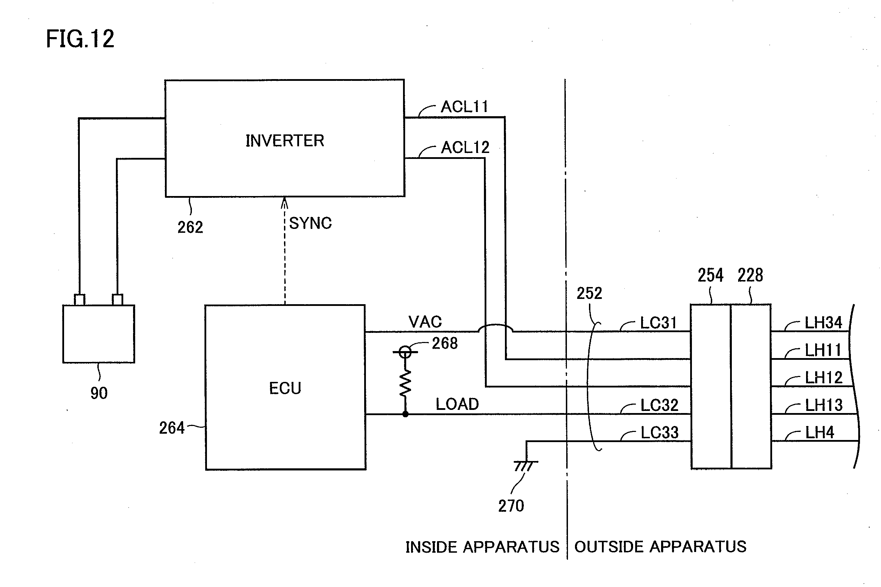

Fig. 12 is a schematic block diagram of auxiliary electric-power supply apparatus 250 shown in Fig. 11. Referring to Fig. 12, auxiliary electric-power supply apparatus 250 includes battery 90, an inverter 262, an ECU 264, AC lines ACL11 and ACL12, vehicle-side lines LC31 to LC33, connector 254, an electric-power supply node 268, and a ground node 270.

Inverter 262 converts DC electric power supplied from battery 90 into AC electric power for a commercial power source based on an operation command from ECU 264, and outputs the converted AC electric power to AC lines ACL11 and ACL12. On this occasion, inverter 262 receives synchronization signal SYNC from ECU 264, and generates the AC electric power in synchronization with synchronization signal SYNC.

ECU 264 determines whether electric power supply is requested from the house side based on signal LOAD on vehicle-side line LC22. Since the method of generating signal LOAD is the same as that in the third embodiment, the description thereof will not be repeated.

Further, ECU 264 receives AC voltage VAC from voltage sensor 232 via house-side line LH34, connectors 228 and 254, and vehicle-side line LC31, generates synchronization signal SYNC in synchronization with the phase of the received AC voltage VAC, and outputs synchronization signal SYNC to inverter 262. Since the method of generating synchronization signal SYNC is the same as that in ECU 61 of hybrid vehicles 210A and 210B in the third embodiment, the description thereof will not be repeated.

Although auxiliary electric-power supply apparatus 250 and one hybrid vehicle 210 are used to establish the electric-power supply system in the above description, auxiliary electric-power supply apparatus 250 and two or more hybrid vehicles may be used to establish the electric-power supply system.

As described above, according to the fourth embodiment, one of auxiliary electric-power supply apparatus 250 and hybrid vehicle 210 can be selected by switch set 220 and connected to house load 20. Therefore, even when hybrid vehicle 210 is separated from house-side connector 230 to be refueled, electric power can surely be supplied continuously from permanently installed auxiliary electric-power supply apparatus 250 to house load 20.

Although the hybrid vehicle has been described to generate AC electric power across neutral point N1 in motor generator MG1 and neutral point N2 in motor generator MG2, an inverter exclusively for generating AC electric power to be supplied to house load 20 may be provided separately.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An electric-power supply system, comprising:
a plurality of vehicles electrically connected in parallel with respect to an electric load and supplying electric power to said electric load; and
a system controller determining allocation of amounts of electric power supply from said plurality of vehicles based on an amount of load on said electric load and an amount of electric power capable of being supplied from each of said plurality of vehicles,
each of said plurality of vehicles supplying electric power to said electric load based on said allocation.

2. The electric-power supply system according to claim 1, wherein said system controller is mounted in one of said plurality of vehicles.

3. The electric-power supply system according to claim 1, wherein
said system controller further generates a synchronization signal for synchronizing AC electric power to be output from each of said plurality of vehicles with each other, and
each of said plurality of vehicles outputs the AC electric power in synchronization with said synchronization signal.

4. The electric-power supply system according to claim 1, wherein each of said plurality of vehicles includes:
an internal combustion engine;
a generator coupled to said internal combustion engine and including a first three-phase coil in Y connection as a stator coil;
an electric motor including a second three-phase coil in Y connection as a stator coil;
first and second inverters connected to said generator and said electric motor, respectively, to drive said generator and said electric motor, respectively, using electric power generated using output of said internal combustion engine; and
a controller controlling operation of said first and second inverters, and
said controller controls said first and second inverters to generate AC electric power to be supplied to said electric load across a neutral point of said first three-phase coil and a neutral point of said second three-phase coil, using said electric power generated using the output of said internal combustion engine.

5. The electric-power supply system according to claim 4, wherein said system controller calculates the amount of electric power capable of being supplied from each of said plurality of vehicles based on a residual amount of fuel in each of said plurality of vehicles.

6. A vehicle capable of supplying electric power to an electric load external to the vehicle, comprising:
an electric-power generation device generating said electric power;
a first connection terminal for connecting the vehicle with said electric load;
a second connection terminal for connecting another vehicle to the vehicle to electrically connect said other vehicle with the vehicle in parallel with respect to said electric load; and
a system controller determining allocation of amounts of electric power supply from the vehicle and said other vehicle connected to said second connection terminal based on an amount of load on said electric load and an amount of electric power capable of being supplied from each of the vehicle and said other vehicle, operating said electric-power generation device based on said allocation, and outputting an electric power command in accordance with said allocation to said other vehicle.

7. The vehicle according to claim 6, wherein said system controller further outputs a synchronization signal for synchronizing second AC electric power to be output from said other vehicle connected to said second connection terminal to first AC electric power to be generated by said electric-power generation device, to said other vehicle.

8. The vehicle according to claim 6, wherein said electric-power generation device includes:
an internal combustion engine;
a generator coupled to said internal combustion engine and including a first three-phase coil in Y connection as a stator coil;
an electric motor including a second three-phase coil in Y connection as a stator coil;
first and second inverters connected to said generator and said electric motor, respectively, to drive said generator and said electric motor, respectively, using electric power generated using output of said internal combustion engine; and
a controller controlling operation of said first and second inverters, and
said controller controls said first and second inverters to generate AC electric power to be supplied to said electric load across a neutral point of said first three-phase coil and a neutral point of said second three-phase coil, using said electric power generated using the output of said internal combustion engine.

9. The vehicle according to claim 8, wherein said system controller calculates the amount of electric power capable of being supplied from each of the vehicle and said other vehicle connected to said second connection terminal based on a residual amount of fuel in each of the vehicle and said other vehicle.

10. A vehicle capable of supplying electric power to an electric load external to the vehicle, comprising:
an electric-power generation device generating said electric power;
a connection terminal for electrically connecting the vehicle to another vehicle to output the electric power generated by said electric-power generation device via said other vehicle to said electric load; and
a system controller operating said electric-power generation device based on an electric power command received from said other vehicle.

11. The vehicle according to claim 10, wherein said system controller receives a synchronization signal for synchronizing first AC electric power to be generated by said electric-power generation device to second AC electric power to be output from said other vehicle connected to said connection terminal, from said other vehicle, and controls said electric-power generation device to generate said first AC electric power in synchronization with the received synchronization signal.

12. A vehicle capable of supplying electric power to an electric load external to the vehicle, comprising:
an electric-power generation device generating said electric power;
a first connection terminal for electrically connecting the vehicle to another first vehicle to output the electric power generated by said electric-power generation device via said other first vehicle to said electric load;
a second connection terminal for connecting another second vehicle to the vehicle to electrically connect said other second vehicle with the vehicle in parallel with respect to said electric load; and
a system controller operating said electric-power generation device based on an electric power command received from said other first vehicle.

13. The vehicle according to claim 12, wherein said system controller receives a synchronization signal for synchronizing first AC electric power to be generated by said electric-power generation device to second AC electric power to be output from said other first vehicle connected to said first connection terminal, from said other first vehicle, and controls said electric-power generation device to generate said first AC electric power in synchronization with the received synchronization signal.

14. The vehicle according to any of claims 10 to 13, wherein said electric-power generation device includes:
an internal combustion engine;
a generator coupled to said internal combustion engine and including a first three-phase coil in Y connection as a stator coil;
an electric motor including a second three-phase coil in Y connection as a stator coil;
first and second inverters connected to said generator and said electric motor, respectively, to drive said generator and said electric motor, respectively, using electric power generated using output of said internal combustion engine; and
a controller controlling operation of said first and second inverters, and
said controller controls said first and second inverters to generate AC electric power to be supplied to said electric load across a neutral point of said first three-phase coil and a neutral point of said second three-phase coil, using said electric power generated using the output of said internal combustion engine.
